# DEMANDE DE BREVET EUROPEEN

(11) **EP 4 667 796 A1**
(43) Date de publication de la demande: **24.12.2025**
(21) Numéro de dépôt: 24305958.1
(22) Date de dépôt: 18.06.2024
(51) Int. Cl.: F16L 5/04, H02G 3/04, H02G 3/22

(54) **BOÎTIER PASSE CÂBLES**

(71) Demandeur: Soletanche Freyssinet, 92500 Rueil Malmaison (FR)
(72) Inventeur: ORTEGA, Esteban, 26300 ALIXAN (FR)
(74) Mandataire: Plasseraud IP

(57) **Abrégé**

Dispositif coupe-feu pour le calfeutrement d'une ouverture définie au niveau d'un élément de séparation (1) et traversée par des éléments traversants (2), notamment constitués par des câbles, des conduites ou analogue, ce dispositif adoptant la forme d'un boîtier (4) de section rectangulaire, circulaire ou ovale pourvu d'une première ouverture (7) sur une première face (5) d'entrée desdits éléments traversants dans le boîtier, dite face avant du boîtier, et d'une seconde ouverture (8), sur une seconde face (6) , dite face arrière du boîtier, opposée à la première face et formant une ouverture de sortie desdits éléments traversants (2), **tel que** le boîtier comporte des rabats (411, 412, 413) constituant un encadrement de la première ouverture (7) du boîtier, ledit dispositif comporte des plaques de matériau intumescent (11, 12, 13, 14) recouvrant une première partie de la face interne du boîtier côté face arrière du boîtier et des blocs de mousse de calfeutrement (21, 22, 23, 24) côté face avant du boîtier recouvrant une seconde partie de la face interne du boîtier, lesdits blocs de mousse remplissant un premier espace entre la ou les parois du boîtier et lesdites éléments traversant **et** lesdits rabats (411, 412, 413, 421) forment des rebords de retenue desdits blocs de mousse.

## Description

### Domaine technique

La présente divulgation relève du domaine des traversées de cloisons coupe-feu et étanches aux gaz pour des câbles électriques ou des tubes ou tuyauteries.

### Technique antérieure

Il est connu de réaliser des dispositifs de traversée de cloison coupe-feu. Le document WO2006/045985A1 concerne notamment un dispositif coupe-feu pour calfeutrer une ouverture dans une cloison et traversée notamment par des câbles. Ce dispositif a la forme d'un boîtier tubulaire de section rectangulaire pourvu d'une ouverture à travers laquelle doivent passer les câbles. Le corps tubulaire est constitué de deux portions de tube complémentaires qui sont assemblées par des moyens d'assemblage et sont immobilisées l'une par rapport à l'autre. Le dispositif comporte des blocs de mousse ou des brosses côté cloison pour occulter la traversée et empêcher les particules contenues dans un flux d'air, voire un tel flux d'air, de traverser le dispositif, au moins pour une température inférieure à celle d'un incendie. Le dispositif peut en outre comporter des moyens intumescents disposés côté entrée du corps tubulaire.

Le document US2004/016191A1 décrit pour sa part décrit un cadre destiné à délimiter l'accès à un conduit à travers un plancher de bâtiment qui comprend une partie corps rigide et un revêtement en matériau intumescent sur une surface intérieure de la partie corps rigide. Le matériau intumescent a une capacité d'expansion suffisante pour fermer l'ouverture à travers le cadre dans des conditions qui produisent une expansion du revêtement. Une autre technologie de manchon coupe-feu est décrite dans le document WO2017/059176 A1 qui propose un manchon coupe-feu auto-ajustable s'introduisant dans des murs. Le manchon comporte un couloir d'accès qui le traverse pour recevoir des câbles pénétrant dans le mur. Des tampons coupe-feu opposés de part et d'autre des câbles et montés en arc de cercle s'appliquent sur les câbles. Des blocs en saillie fixé aux tampons fournissent une capacité d'auto-ajustement et d'étanchéité du dispositif, afin d'éviter les fuites d'air ou de fumée autour des câbles.

### Problème technique

Ces solutions connues ne permettent pas simplement d'ajouter ou de retirer des câbles ou éléments de tuyauteries sans réduire ou perturber l'étanchéité du passage. De même, certaines de ces solutions sont insatisfaisantes car elles ne permettent pas d'assurer à la fois le compartimentage coupe-feu et une perméabilité à l'air restreinte. Pour d'autres, leur positionnement encastré et leurs dimensions restreintes obligent afin de restaurer le degré coupe-feu de la traversée de juxtaposer de nombreux modules, d'utiliser des produits de scellement secondaires mais surtout d'interrompre les chemins de câbles à travers l'élément séparatif, ce qui rend les opérations de calfeutrement coupe-feu longues et fastidieuses.

### Exposé de l'invention

Au vu de cette situation la présente divulgation propose un dispositif coupe-feu pour le calfeutrement d'une ouverture définie au niveau d'un élément de séparation et traversée par des éléments traversants, notamment constitués par des câbles, chemin de câbles, éléments de tuyauteries ou analogue, ce dispositif adoptant la forme d'un boîtier de section rectangulaire, circulaire ou ovale pourvu d'une première ouverture sur une première face d'entrée desdits éléments traversants dans le boîtier, dite face avant du boîtier, et d'une seconde ouverture, sur une seconde face, dite face arrière du boîtier, opposée à la première face et formant une ouverture de sortie desdits éléments traversants, caractérisé en ce que le boîtier comporte des rabats constituant un encadrement de la première ouverture du boîtier, en ce que ledit dispositif comporte des plaques de matériau intumescent, recouvrant une première partie de la face interne du boîtier côté face arrière du boîtier et fixées sur le boîtier, et des blocs de mousse de calfeutrement côté face avant du boîtier recouvrant une seconde partie de la face interne du boîtier, lesdits blocs de mousse remplissant un premier espace entre la ou les parois du boîtier et lesdites éléments traversant et en ce que lesdits rabats forment des rebords de retenue desdits blocs de mousse.

En condition non accidentelle, l'invention permet donc de laisser la traversée ouverte tout en assurant le maintien de la sectorisation passive incendie et en restreignant le plus possible la perméabilité à l'air tant hors incendie que pendant un incendie

Le boîtier peut être de section circulaire les rabats étant issus d'un bord avant du boîtier et tournés vers l'intérieur du boîtier.

Le boîtier peut aussi être de section parallélépipédique, lesdits rabats comprenant des premiers rabats issus d'un plafond et de faces latérales du boîtier côté première ouverture du boîtier et comportant au moins un deuxième rabat replié depuis le fond du boîtier, lesdits premiers et deuxième rabats formant un encadrement de la première ouverture tourné vers l'intérieur du boîtier, lesdits premiers rabats et ledit au moins un deuxième rabat formant lesdits rebords de retenue desdits blocs de mousse.

Le boîtier peut être réalisé en deux parties et comporter une première partie, formant ledit plafond du boîtier et lesdites faces latérales du boîtier, et une seconde partie, formant un fond du boîtier, la première partie comportant lesdits premiers rabats le fond comportant ledit deuxième rabat et comportant en outre des troisièmes rabats repliés pour s'appliquer sur lesdites faces latérales.

La deuxième partie du boîtier est avantageusement démontable de la première partie du boîtier, boîtier en position sur ledit élément de séparation.

Le dispositif peut comporter des dispositifs de verrouillage de type grenouillère et crochet entre la première partie du boîtier et la deuxième partie du boîtier.

Le boîtier peut comporter des languettes de fixation du boîtier côté face arrière du boîtier.

Lesdites languettes peuvent avantageusement encadrer le boîtier et être percées de trous de passage de vis de fixation du boîtier sur l'élément de séparation.

Lesdits blocs de mousse peuvent s'étendre depuis ladite face avant jusqu'à 20 à 50% de la profondeur du boîtier depuis sa face avant, lesdites plaques de matériau intumescent s'étendant sur le complément de profondeur jusqu'à la face arrière du boîtier.

Le matériau desdites plaques de matériau intumescent peut être réalisé à partir :
a. d'au moins une résine de PVC adaptée aux procédés d'extrusion ou par une voie de type plastisol ;
b. d'au moins un plastifiant;
c. d'au moins un agent retardateur de flammes et/ou de charbonnement.

Le matériau intumescent peut avantageusement contenir des charges secondaires choisies parmi le kaolin, la silice colloïdale, des colorants, des pigments.

L'agent retardateur de flammes et/ou de charbonnement est avantageusement choisi parmi les graphites expansibles, les polyphosphates d'ammonium, le borate de zinc, l'alumine hydratée.

Le matériau intumescent est avantageusement un matériau gélifié à une température de 140°C à 200°C comportant 20% à 60% en poids de résine PVC, 10% à 70% en poids de plastifiant phosphaté, 10% à 50% en poids de graphite exfoliant.

La mousse de calfeutrement est préférablement une mousse élastique à cellules fermées.

La mousse de calfeutrement est préférablement choisie parmi une mousse polyuréthane, une mousse en caoutchouc synthétique de type chloroprène, NBR ou EPDM, une mousse silicone comportant des charges ignifugeantes.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1] montre un dispositif coupe-feu de la présente divulgation schématisé en position en perspective;
[Fig. 2] montre le dispositif coupe-feu en perspective trois quart avant;
[Fig. 3] montre le dispositif coupe-feu en perspective trois quart arrière;
[Fig. 4] montre le dispositif coupe-feu en éclaté perspective trois quart avant;
[Fig. 5] montre le dispositif coupe-feu en éclaté en perspective trois quart arrière ;

### Description des modes de réalisation

Les dessins et la description ci-après contiennent des éléments pouvant non seulement servir à mieux faire comprendre la présente invention, mais aussi contribuer à sa définition, le cas échéant.

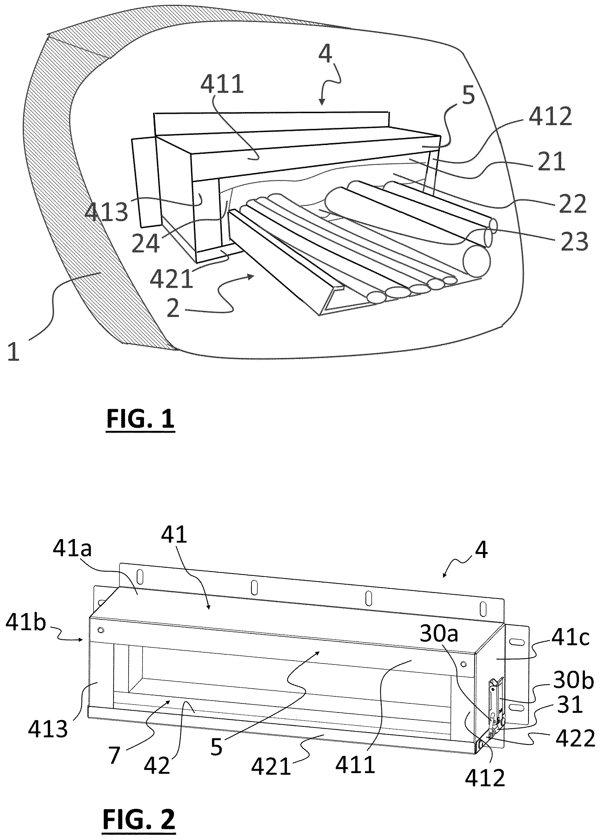

Il est maintenant fait référence à la figure 1 qui représente un dispositif utilisé pour assurer le calfeutrement coupe-feu d'une traversée permettant le passage de câbles ou d'éléments de tuyauteries 2 à travers une séparation 1 comme un mur ou un plafond pourvue d'une ouverture 1a traversante. L'invention se présente sous la forme d'un boîtier 4 notamment un boîtier métallique acier.

Selon la figure 2, le boîtier parallélépipédique est pourvu d'une première ouverture 7 sur une première face 5 d'entrée desdits éléments traversants 2 dans le boîtier, dite face avant du boîtier.

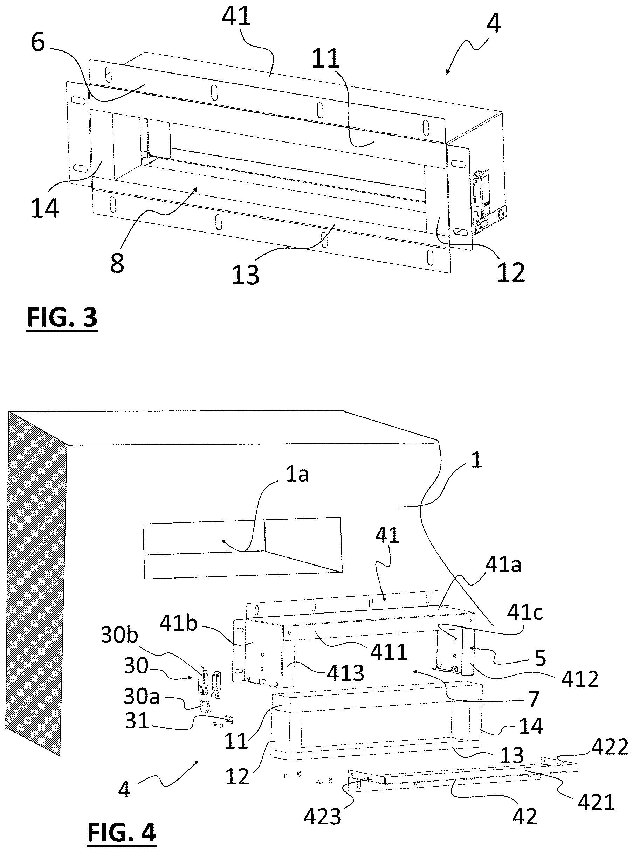

Selon la figure 3, le boîtier est pourvu d'une seconde ouverture 8, sur une seconde face 6 du boîtier, côté élément de séparation, opposée à la première face. La seconde face 6, dite face arrière du boîtier, forme une ouverture de sortie desdits éléments traversants 2.

Selon la figure 3, le boîtier est réalisé en deux parties et comporte une première partie 41, formant un plafond 41a du boîtier et deux faces latérales 41b, 41c du boîtier, et une seconde partie 42, formant un fond du boîtier.

La première partie comporte des premiers rabats 411, 412, 413 côté face avant, issus des plafond 41a et faces latérales 41b, 41c, constituant un encadrement de la première ouverture 7 du boîtier.

La seconde partie 42 comporte un deuxième rabat 421 replié depuis le fond du boîtier vers ladite première partie et prolongeant ledit encadrement.

La seconde partie comporte en outre des troisièmes rabats 422, 423 repliés depuis le fond du boîtier vers ladite première partie.

Ces troisièmes rabats s'appliquent sur les faces latérales 41b, 41c de la première partie 41 pour refermer le boîtier.

La deuxième partie du boîtier 42 est démontable de la première partie 41 du boîtier, boîtier en position sur ledit élément de séparation.

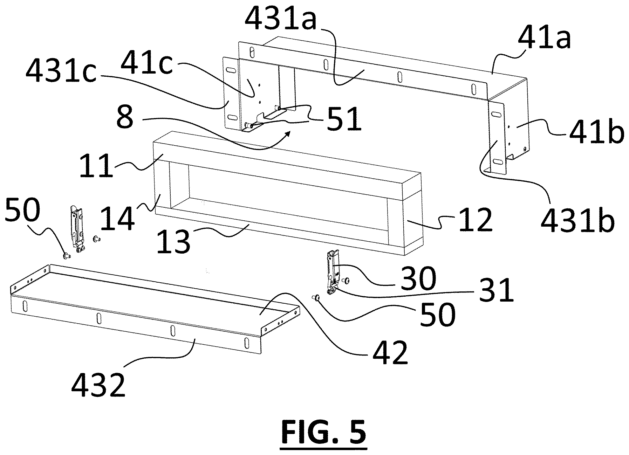

Repérés en figure 5, des vis 50 traversant les troisièmes rabats et se vissant dans des inserts 51 fixés aux faces latérales 41b, 41c servent à maintenir les deux parties du boîtier solidaires.

De même des attaches à crochet 30, 31 représentées notamment en figure 4 et comportant une boucle manoeuvrée par un levier 30 pour s'accrocher sur un crochet 31 permettent d'assembler les deux parties en attendant le montage et le serrage des vis 50.

En rapport aux figures 3 et 5 notamment le dispositif comporte des plaques de matériau intumescent 11, 12, 13, 14 recouvrant une partie de la face interne du boîtier côté face arrière du boîtier.

Ces plaques appliquées contre la face interne du boîtier laissent ouvert le passage 8 pour les câbles, les chemins de câbles ou autre traversant 2 passant au travers du boîtier et de l'ouverture 1a.

De retour à la figure 1, côté face avant du boîtier, le dispositif comporte des blocs de mousse de calfeutrement 21, 22, 23, 24 côté face avant du boîtier, remplissant un premier espace entre le plafond du boîtier et lesdites éléments traversant et remplissant un second espace entre le fond du boîtier et lesdits élément traversant.

Contrairement aux plaques de matériau intumescent, les blocs de mousse remplissent et étanchéifient le plus possible l'ouverture 8. Aussi, les premiers rabats 411, 412, 413 et deuxième rabat 421 forment des parois de retenue desdits blocs de mousse pour leur éviter de ressortir vers l'avant du boîtier.

Le dispositif de la présente divulgation est disposé en applique autour de la traversée à protéger et peut être installé indépendamment du fait de la présence ou non de traversants existants. La première partie 41 du boîtier et la deuxième partie 42 du boîtier comportent des languettes de fixation 431a, 431b, 431c, 432 du boîtier côté face arrière du boîtier.

Ces languettes repliées vers l'extérieur à partir de la face supérieure, des faces latérales et de la face inférieure du boîtier encadrent le boîtier et sont pourvues de trous de passage de vis de fixation du boîtier sur la séparation 1.

Le matériau intumescent dont le volume lors d'un incendie augmente de manière conséquente et permet d'obturer la traversée et de garantir son calfeutrement coupe-feu en cas d'incendie tandis que la mousse assure une relative étanchéité à température ambiante normale.

Comme dit plus haut, en condition non accidentelle, l'invention permet donc de laisser la traversée ouverte tout en assurant le maintien de la sectorisation passive incendie et en restreignant le plus possible la perméabilité à l'air tant hors incendie que pendant un incendie. Ceci rend donc les opérations de maintenance, d'ajout ou de retirage de traversants très aisées sans besoin additionnel de quelconque produit ou outillage spécifique puisque la mousse disposée sur l'avant du boîtier peut être aisément retirée et remise. Ainsi, le dispositif de la présente divulgation est compatible avec les locaux disposant de systèmes actifs d'extinction feu automatique aux gaz ou de locaux devant garantir une certaine étanchéité à l'air entre éléments séparatifs. Dans ce cas cette fonction est assurée par les blocs de mousse en polymère. De par sa nature souple et élastique, cette mousse épouse au plus proche les câbles ou les éléments traversants. La perméabilité à l'air de la traversée se trouve alors restreinte et rend ainsi compatible le système de protection feu avec les installations automatiques aux gaz.

Il est à noter que dans le cas où des risques d'incendie existent des deux côtés de la paroi 1, deux dispositifs peuvent être utilisés tandis que lorsqu'un risque d'incendie existe d'un seul côté le boîtier sera disposé du côté ou l'incendie est susceptible de se déclarer pour que les blocs de mousse réalisent l'étanchéité tant que la température n'est pas suffisante pour déclencher l'intumescence des plaques de matériau intumescent qui vont alors refermer l'ouverture côté incendie.

### Descriptif du matériau intumescent :

Le matériau intumescent utilisé ici, mais qui peut aussi être utilisé indépendamment du boîtier décrit, est un matériau avantageusement réalisé à base de résine de PVC (polychlorure de vinyle). Il est connu d'aboutir à de tels matériaux en mélange de telles résines à des charges intumescentes et/ou retardateur de flammes par des techniques d'extrusion. D'une manière avantageuse il est également possible d'aboutir à de telles compositions par une voie de type plastisol. Le matériau est ainsi produit par des techniques de moulage contrairement à la pratique habituelle qui consiste à extruder le PVC nécessitant l'utilisation de machines onéreuses.

Les résines PVC pour plastisol sont préparées par polymérisation en émulsion permettant d'obtenir des particules entre 1 et 20 µm (contre 70 et 200 µm par les techniques usuelles). L'addition d'un plastifiant à ce type de résine conduit à un mélange d'aspect pâteux couramment appelé plastisol. Aussitôt après sa fabrication le plastisol se compose d'une phase continue de plastifiant et d'une phase discontinue de particules de PVC. Par chauffage à des températures supérieures à 100°C et idéalement entre 140 et 200°C s'opère, par l'apport de chaleur, un phénomène de gélification permettant d'obtenir un matériau solide homogène. La gélification dépend bien entendu aussi bien de la température que de la durée du chauffage.

Des exemples de formulations permettant d'obtenir un plastisol de PVC incorporant des agents ignifugeants.

Le but recherché restant de pouvoir incorporer au mélange plastisol une part significative d'agents retardateurs de flammes afin de conférer au matériau obtenu après gélification des propriétés d'ignifugation et de résistance au feu. On accède alors simplement au matériau sans utilisation de machines onéreuses type extrudeuses. Dans l'absolu cette technique permet également d'aboutir à des formes diverses par moulage et non de manière limitative à du jonc ou des bandes comme dans le cas des techniques d'extrusion.

Une telle formule se compose :
a. d'au moins une résine de PVC issue d'un procédé de polymérisation en émulsion et appliquée à la préparation de plastisol. On distinguera les résines homopolymère PVC et les résines copolymère PVC et polyacétate de vinyle (PVAc). Les copolymères PVC/PVAc sont essentiellement utilisés dans les plastisols afin de diminuer la température de gélification ;
b. d'au moins un plastifiant. De manière avantageuse l'invention ne se limite pas à l'emploi de plastifiants usuels tel que les phtalates (BBP, DOP, ...), les plastifiants époxydés (huile de soja époxydée, ...), les paraffines chlorées en privilégiant l'emploi de phosphate liquide bien connu à la fois comme agent plastifiant et comme agent retardateur de flamme ;
c. d'au moins un agent retardateur de flammes et/ou de charbonnement tel que les graphites expansibles, les polyphosphates d'ammonium, le borate de zinc, l'alumine hydratée, ... ;
d. peut contenir au besoin des charges secondaires : kaolin, silice colloïdale, colorants, pigments, ... ;
e. peut contenir au besoin au moins un agent rhéologique : solvant ou abaisseur de viscosité, anti-UV, ... ;

Après mélange des divers constituants, le mélange pâteux obtenu, est transféré par gravité dans un moule puis placé dans une étuve à 150°C pendant quelques minutes. Le temps d'exposition à haute température dépend fortement de l'épaisseur de mélange à gélifier.

De tels matériaux ainsi réalisés peuvent présenter des taux d'intumescence d'au moins 10 fois supérieur à l'épaisseur initiale lorsqu'il est soumis à des températures d'un incendie.

Le matériau intumescent est réalisé en forme de bandes intumescentes qui sont collées ou fixées mécaniquement, au moyen de taquets, de plaquettes de maintien tenues par vissage dans le boîtier ou autre.

Les blocs d'étanchéité aux gaz en mousse polymère sont des blocs déformables de grande élasticité en sorte de s'adapter au plus proche des éléments traversants. La mousse peut être notamment une mousse polyuréthane ou ou autres polymères et idéalement à cellules fermées pour s'opposer au passage de gaz au travers du boîtier équipé. L'élasticité de la mousse est telle qu'elle épouse les éléments traversants et qu'elle reprend sa position originelle si un ou plusieurs desdits éléments sont retirés. Ces mousses sont préférablement formulées au moyen de charges ignifugeantes connues afin d'améliorer leurs réactions au feu et de garantir leurs non-inflammation lors des premières minutes de l'incendie, le temps que le matériau intumescent se soit déployé et ait obturé la traversée.

Selon la figure 6 est représenté un exemple de boîtier tubulaire parallélépipédique monobloc de l'invention permettant de voir les rabats retenant les blocs de mousse. Selon la figure 7 est représenté un exemple de boîtier tubulaire de section circulaire pour lequel les rabats sont disposés sur le pourtour de l'entrée du boîtier et tournés vers l'intérieur du boîtier pour retenir les blocs de mousse.

### Application industrielle

La présente divulgation concerne donc un système de calfeutrement passif coupe-feu de passage de câbles électriques adaptée aux locaux devant assurer conjointement des requis d'étanchéité aux gaz. Elle vise à répondre aux problématiques techniques suivantes :
a. Le système en condition non accidentelle laisse libre la traversée permettant ainsi, de manière la plus aisée possible, les opérations de retirage de câbles et de maintenance électrique sans utilisation d'outillages spécifiques ou de produits supplémentaires ;
b. Bien que laissant ouverte la traversée le système restreint sa perméabilité à l'air sans compromettre les fonctions exposées au point a ;
c. Dans les premières minutes de l'incendie, les bandes d'étanchéité souples en polymère rendent la traversée suffisamment étanche pour permettre au système actif d'extinction au gaz de se déployer en concentration suffisante afin d'éteindre l'incendie ou d'en limiter sa propagation.
d. Dans le cas où cette première parade échouerait et que l'incendie soit pleinement développé, les bandes en PVC intumescents prendront le relais à partir de températures supérieures à 150°C par une augmentation conséquente de leur volume ce qui aura pour effet de refermer complètement la traversée. Le sinistre sera alors cantonné au local dans lequel il s'est développé et ne pourra se propager aux pièces ou étages adjacents. Ceci permettra en toute sécurité l'évacuation des personnes et l'arrivée des forces d'intervention.

Le dispositif de la présente divulgation s'adresse ainsi aux locaux devant garantir un niveau d'étanchéité à l'air et/ou aux locaux disposant de systèmes actifs de protection incendie aux gaz tels que data center, musées, ou autres.

Enfin le dispositif de la présente divulgation peut être installé en construction neuve ou en réhabilitation indépendamment du fait de la présence ou non de traversants et ceci sans interrompre les chemins de câbles ou les éléments de tuyauteries.

L'invention ne se limite pas aux exemples décrits ci-avant, seulement à titre d'exemple, mais elle englobe toutes les variantes que pourra envisager l'homme de l'art dans le cadre de la protection recherchée.

## Revendications

1. Dispositif coupe-feu pour le calfeutrement d'une ouverture définie au niveau d'un élément de séparation (1) et traversée par des éléments traversants (2), notamment constitués par des câbles, chemin de câbles, éléments de tuyauteries ou analogue, ce dispositif adoptant la forme d'un boîtier (4) de section rectangulaire, circulaire ou ovale pourvu d'une première ouverture (7) sur une première face (5) d'entrée desdits éléments traversants dans le boîtier, dite face avant du boîtier, et d'une seconde ouverture (8), sur une seconde face (6) , dite face arrière du boîtier, opposée à la première face et formant une ouverture de sortie desdits éléments traversants (2), **caractérisé en ce que** le boîtier comporte des rabats (411, 412, 413) constituant un encadrement de la première ouverture (7) du boîtier, **en ce que** ledit dispositif comporte des plaques de matériau intumescent (11, 12, 13, 14), recouvrant une première partie de la face interne du boîtier côté face arrière du boîtier et fixées sur le boîtier, et des blocs de mousse de calfeutrement (21, 22, 23, 24) côté face avant du boîtier recouvrant une seconde partie de la face interne du boîtier, lesdits blocs de mousse remplissant un premier espace entre la ou les parois du boîtier et lesdites éléments traversant **et en ce que** lesdits rabats (411, 412, 413, 421) forment des rebords de retenue desdits blocs de mousse.

2. Dispositif coupe-feu selon la revendication 1 pour lequel le boîtier est de section circulaire les rabats étant issus d'un bord avant du boîtier et tournés vers l'intérieur du boîtier.

3. Dispositif coupe-feu selon la revendication 1 pour lequel le boîtier est de section parallélépipédique, lesdits rabats comprenant des premiers rabats (411, 412, 413) issus d'un plafond (41a) et de faces latérales (41b, 41c) du boîtier côté première ouverture (7) du boîtier et comportant au moins un deuxième rabat (421) replié depuis le fond du boîtier, lesdits premiers et deuxième rabats formant un encadrement de la première ouverture tourné vers l'intérieur du boîtier, lesdits premiers rabats (411, 412, 413) et ledit au moins un deuxième rabat (421) formant lesdits rebords de retenue desdits blocs de mousse.

4. Dispositif coupe-feu selon la revendication 3 pour lequel le boîtier est réalisé en deux parties et comporte une première partie (41), formant ledit plafond (41a) du boîtier et lesdites faces latérales (41b, 41c) du boîtier, et une seconde partie (42), formant un fond du boîtier, la première partie comportant lesdits premiers rabats le fond comportant ledit deuxième rabat et comportant en outre des troisièmes rabats (422, 423) repliés pour s'appliquer sur lesdites faces latérales.

5. Dispositif selon revendication 4 pour lequel la deuxième partie du boîtier (42) est démontable de la première partie (41) du boîtier, boîtier en position sur ledit élément de séparation.

6. Dispositif selon la revendication 4 ou 5 comportant des dispositifs de verrouillage de type grenouillère et crochet (30, 31) entre la première partie (41) du boîtier et la deuxième partie (42) du boîtier.

7. Dispositif selon l'une quelconque des revendications précédentes pour lequel le boîtier comporte des languettes de fixation (431a, 431b, 431c, 432) du boîtier côté face arrière du boîtier.

8. Dispositif selon la revendication 7 pour lequel lesdites languettes encadrent le boîtier et sont percées de trous de passage de vis de fixation du boîtier sur l'élément de séparation.

9. Dispositif selon l'une quelconque des revendications précédentes pour lequel lesdits blocs de mousse s'étendent depuis ladite face avant jusqu'à 20 à 50% de la profondeur du boîtier depuis sa face avant, lesdites plaques de matériau intumescent s'étendant sur le complément de profondeur jusqu'à la face arrière du boîtier.

10. Dispositif selon l'une quelconque des revendications précédentes pour lequel le matériau desdites plaques de matériau intumescent est réalisé à partir :
a. d'au moins une résine de PVC adaptée aux procédés d'extrusion ou par une voie de type plastisol ;
b. d'au moins un plastifiant;
c. d'au moins un agent retardateur de flammes et/ou de charbonnement.

11. Dispositif selon la revendication 10 pour lequel le matériau intumescent contient des charges secondaires choisies parmi le kaolin, la silice colloïdale, des colorants, des pigments.

12. Dispositif selon l'une quelconque des revendications 10 ou 11 pour lequel l'agent retardateur de flammes et/ou de charbonnement est choisi parmi les graphites expansibles, les polyphosphates d'ammonium, le borate de zinc, l'alumine hydratée.

13. Dispositif selon l'une quelconque des revendications 10, 11 ou 12 pour lequel ledit matériau intumescent est un matériau gélifié à une température de 140°C à 200°C comportant 20% à 60% en poids de résine PVC, 10% à 70% en poids de plastifiant phosphaté, 10% à 50% en poids de graphite exfoliant.

14. Dispositif selon l'une quelconque des revendications précédentes pour lequel ladite mousse de calfeutrement est une mousse élastique à cellules fermées.

15. Dispositif selon la revendication 14 pour lequel ladite mousse de calfeutrement est choisie parmi une mousse polyuréthane, une mousse en caoutchouc synthétique de type chloroprène, NBR ou EPDM, une mousse silicone comportant des charges ignifugeantes.
